# EUROPEAN PATENT SPECIFICATION

(11) **EP 1 304 496 B1**
(45) Date of publication and mention of the grant of the patent: **02.01.2008**
(21) Application number: 02023281.5
(22) Date of filing: 17.10.2002
(51) Int. Cl.: F16D 55/2265, F16D 55/227

(54) **Disk brake for vehicle with bar handle**
Scheibenbremse für Fahrzeug mit Lenkstange
Frein à disque pour un véhicule avec guidon

(30) Priority: 22.10.2001 JP 2001323700
(43) Date of publication of application: 23.04.2003
(73) Proprietor: NISSIN KOGYO CO., LTD., Ueda-shi, Nagano-ken (JP)
(72) Inventor: Fujii, Kenichi, c/o Nissin Kogyo Co., Ltd., Ueda-shi, Nagano-ken (JP)
(74) Representative: Buzzi, Franco

(56) References cited:
- EP-A- 1 043 212
- GB-A- 1 416 122
- GB-A- 1 524 387
- US-A- 4 034 857
- US-A- 4 350 229
- US-A- 4 351 421
- US-A- 5 860 496
- US-A- 6 062 349
- PATENT ABSTRACTS OF JAPAN vol. 001, no. 130 (M-044), 27 October 1977 (1977-10-27) -& JP 52 072065 A (SUMITOMO ELECTRIC IND LTD), 16 June 1977 (1977-06-16)
- PATENT ABSTRACTS OF JAPAN vol. 005, no. 116 (M-080), 25 July 1981 (1981-07-25) -& JP 56 055726 A (MAZDA MOTOR CORP), 16 May 1981 (1981-05-16)
- PATENT ABSTRACTS OF JAPAN vol. 007, no. 041 (M-194), 18 February 1983 (1983-02-18) & JP 57 190133 A (AKEBONO BRAKE KOGYO KK), 22 November 1982 (1982-11-22)
- PATENT ABSTRACTS OF JAPAN vol. 006, no. 260 (M-180), 18 December 1982 (1982-12-18) -& JP 57 154528 A (AKEBONO BRAKE KOGYO KK), 24 September 1982 (1982-09-24)

## Description

### BACKGROUND OF THE INVENTION

The present invention relates to a disk brake for a vehicle with a bar handle, such as vehicle including two- and three-wheeled motorcycles, three- and four-wheeled baggies and so on. More particularly, the present invention relates to a disk brake for causing braking action by guiding a caliper body in the direction of a disk axis by a pair of sliding pins or the like.

There is a disk brake for a vehicle with a bar handle as disklosed in, for example, Japanese Patent Publication No. 14937/1985 wherein it is attempted to increase the support rigidity force of a caliper body by molding a pair of caliper brackets integrally with the bottom case of a front fork as a wheel suspension unit.

The caliper brackets above are respectively positioned on the rotating-in disk side and the rotating-out disk side of a bottom case and the caliper bracket on the rotating-in disk side is formed with a U-shaped depression. The caliper bracket on the rotating-out disk side is provided with an arm portion straddling the outer periphery of a disk rotor in the direction of a disk axis and projecting from the bottom case, a slide pin support portion on one side of the arm portion, and a pair of torque receiving portions suspended on both sides of the disk rotor from the base and front end of the arm portion. The caliper bracket rotating-out disk side is movably supported in the direction of the disk axis by idly fitting a projected piece in the depression of the caliper bracket on the rotating-in disk side and passing the slide pin through the slide pin support portion on the rotating-out disk side. Further, the rotating-out disk sides of the friction pads on both the respective sides of the disk rotor.

With the arrangement above, the structure of the caliper brackets becomes complicated though the support rigidity force of the caliper body is improved. As the arm portion and the front end of the torque receiving portion of the caliper bracket on the rotating-out disk side are L-shaped, the caliper brackets and the bottom case are difficult to mold together. Moreover, as the support rigidity force of the torque receiving portion on the front end side of the arm portion is inferior to that on the base side of the arm portion, there is the possibility of incurring delay in the rise-up of the initial braking force and loss in the braking force.

Disk brake arrangements of the above-referenced type are generally known from US-A-4 351 421 and GB-A- 1524387 .

From US-A-6 062 349a disk brake for automotive vehicles is also known, corresponding to the pre-characterising part of Claim 1.

Moreover, EP-A-1 043 212 is disclosing a steering knuckle and suspension module for motor vehicles including a brake disk arrangement whose mounting bracket is formed integrally with a bottom case of the wheel suspension.

### SUMMARY OF THE INVENTION

It is an object of the present invention to provide a disk brake for a vehicle with a bar handle excellent in not only the rise-up of the initial braking force but also braking efficiency by raising the rigidity force of caliper brackets with simple structure and improving torque receiving rigidity from friction pads.

The above-mentioned object of the present invention can be achieved by a disk brake for a vehicle with a bar handle, as set forth in claim 1.

### BRIEF DESCRIPTION OF THE DRAWINGS

Fig. 1 shows a partial sectional plan view of a disk brake according to a first embodiment of the present invention;

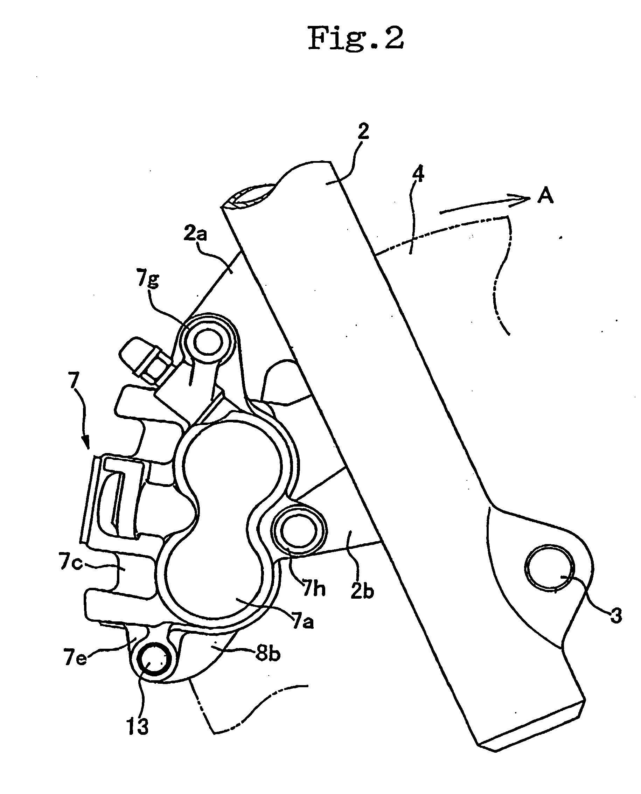

Fig. 2 shows an elevational view of the disk brake according to the embodiment;
Fig. 3 shows a sectional view taken on line III - III of Fig. 4;

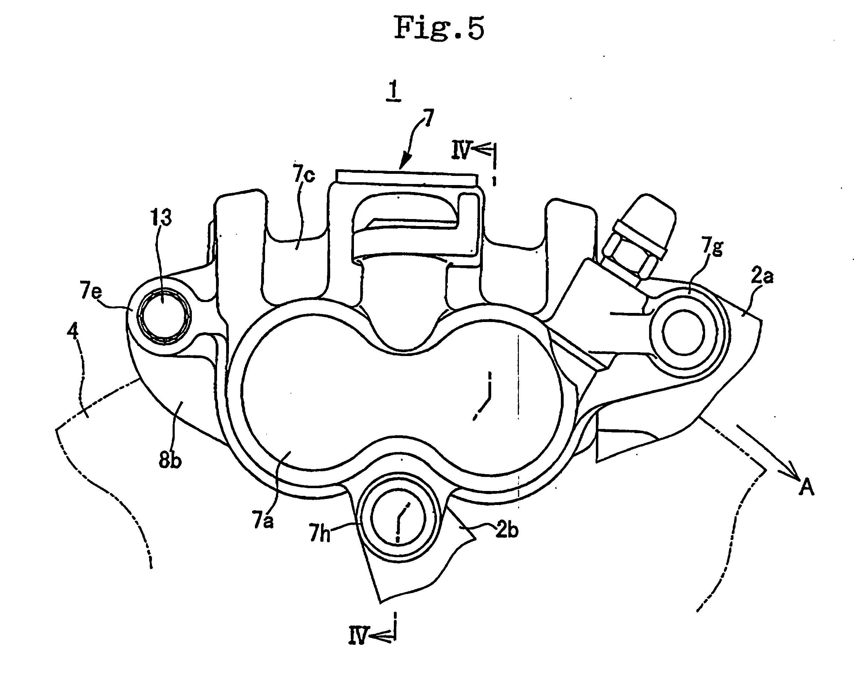

Fig. 4 shows a sectional view taken on line IV - IV of Fig. 5 ; and
Fig. 5 shows an elevational view of the disk brake according to one embodiment of the present invention.

### DETAILED DESCRIPTION OF THE PREFERRED EMBODIMENT

A description will now be given of an exemplary application of the present invention to the front wheel of a two-wheeled motorcycle by reference to the drawings.

A disk brake 1 together with a front wheel (not shown) is pivotally supported by an axle 3 on the bottom case 2 of a front fork forming a wheel suspension unit. The disk brake 1 is provided with a disk rotor 4 integrally rotating with the front wheel in the direction of an arrow A during the travel of a motorcycle. The disk brake 1 is also provided with a pin-slide type caliper body 7 slidably supported by a pair of caliper brackets 2a and 2b integrally provided to the bottom case 2 in the direction of a disk axis via slide pins 5 and 6 in one side portion of the disk rotor 4. The disk brake 1 is further provided with a pair of friction pads 8 and 9 disposed opposite to each other while interposing the disk rotor 4 therebetween and also held between an action part 7a and a reaction part 7b of the caliper body 7.

The caliper body 7 is formed with the action part 7a and the reaction part 7b disposed on both side portions of the disk rotor 4, and a bridge part 7c for coupling these action and reaction parts 7a and 7b by straddling the outer periphery of the disk rotor 4. In the action part 7a, closed-end cylinder holes 10 and 10 are provided in parallel with their respective rotor sides being opened and in the reaction part 7b, a counterforce pawl 7d is formed. Pistons 11 are respectively fitted into cylinder holes 10 and 10 liquid-tightly and movably and a hydraulic chamber 12 is sectioned between each piston 11 and the cylinder hole 10. The guide arms 7e and 7e of a hanger pin 13 are projected on the rotating-in disk side (so called as a leading edge side, generally) of the action part 7a and the reaction part 7b, and arms 7g and 7h for fitting slide pins 5 and 6 are provided in an extended condition on the rotating-out disk side (so called as a trailing edge side, generally) of the action part 7a and the inner peripheral side of the disk.

The caliper brackets 2a and 2b are platelike bodies integrally formed with the bottom case 2. The one caliper bracket 2a is disposed on the rotating-out disk side of the caliper body 7 and the outer peripheral side of the disk, whereas the other caliper bracket 2b is disposed on the inner peripheral side of the disk of the caliper body 7, the slide pins 5 and 6 being projected in parallel to the disk axis on the action part side of the caliper brackets 2a and 2b. The slide pin 5 on the rotating-out disk side is passed through the through-hole 7i of the fitting arm 7g projecting from the caliper body 7 toward the rotating-out disk side, whereas the slide pin 6 on the inner peripheral side of the disk is passed through the through-hole 7j of the fitting arm 7h projecting from the caliper body 7 toward the inner peripheral side of the disk. The caliper body 7 is supported in such a manner as to be made movable by the slide pins 5 and 6 in the direction of the disk axis.

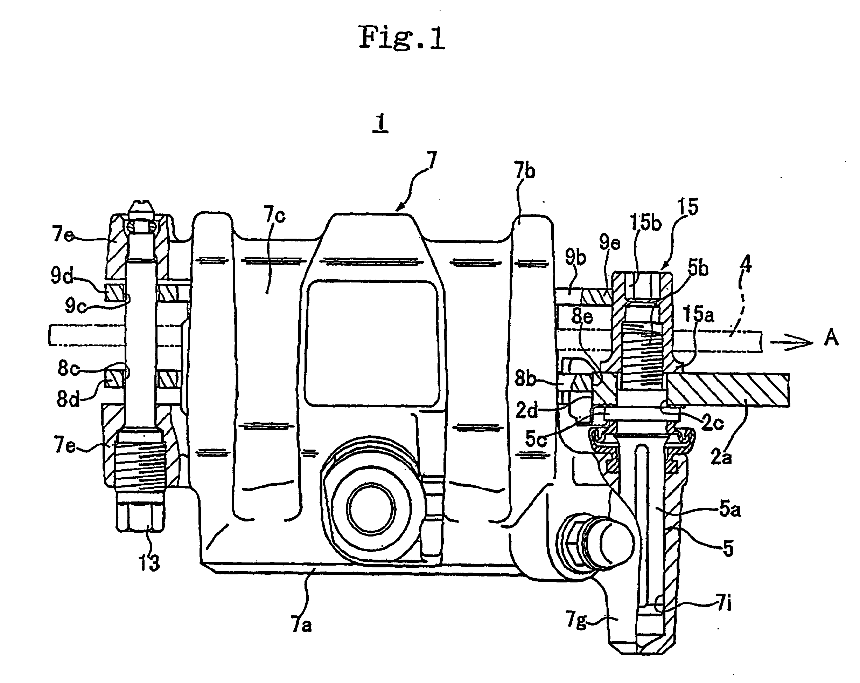

As shown in Fig. 1, the slide pin 5 on the rotating-out disk side essentially consists of a shaft portion 5a, a male screw 5b for fitting the shaft portion 5a to the caliper bracket 2a and a flange 5c peripherally provided therebetween. The male screw 5b is passed through a through-hole 2c from the action part side of the caliper bracket 2a so that the flange 5c is brought into contact with the action part side of the caliper bracket 2a. The male screw 5b projecting from the through-hole 2c toward the reaction part side is screwed into a sleeve nut 15 and then the caliper bracket 2a is clamped with the flange 15a of the sleeve nut 15 and the flange 5c of the slide pin 5, whereby the slide pin 5 is projected in parallel to the disk axis on the action part side of the caliper bracket 2a.

The sleeve nut 15 is a closed-end cylindrical metal cap nut equivalent to a torque receiving member according to the invention, the flange 15a being formed on the open side, and a hexagonal hole 15b in the form of a through-hole for gyrating purpose is formed in the base wall. When the sleeve nut 15 and the male screw of the slide pin 5 are screwed together, the sleeve nut 15 following the slide pin 5 is projected in parallel to the disk axis on the reaction part side of the caliper bracket 2a.

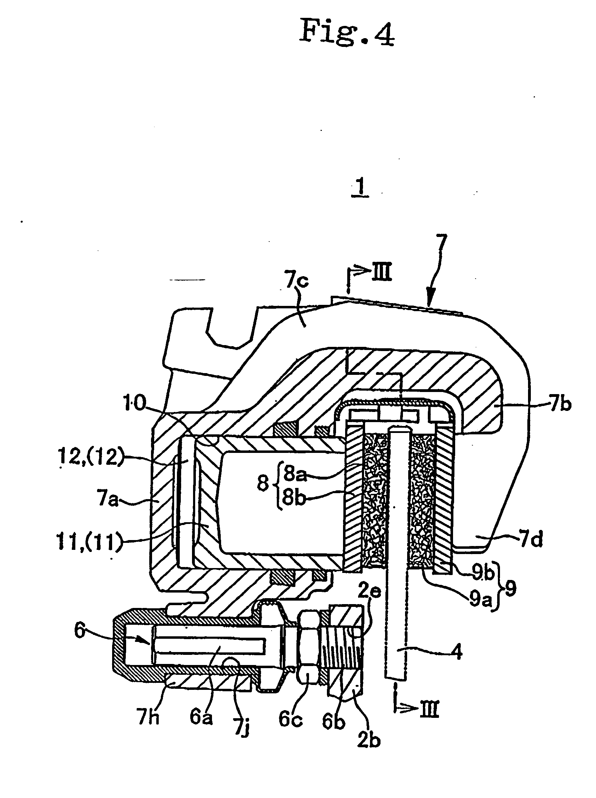

As shown in Fig. 4, the slide pin 6 on the inner peripheral side of the disk essentially consists of a shaft portion 6 inserted into the through-hole 7j of the fitting arm 7h, a male screw 6b for fitting the shaft portion 6a to the caliper bracket 2b and a hexagonal nut 6c formed between the male screw 6b and the shaft portion 6a. The male screw 6b is screwed into the female hole 2e of the caliper bracket 2b from the action part side and the nut 6c is brought into contact with the action part side of the caliper bracket 2b, whereby the slide pin 6 is projected in parallel to the disk axis on the action part side of the caliper bracket 2a.

The hanger pin 13 straddles the outside of the disk rotor 4 and is provided, in parallel to the disk axis, to the guide arms 7e and 7e respectively positioned in the action part 7a of the caliper body 7 and the rotating-in disk side of the reaction part 7b. The rotating-in disk sides of the friction pads 8 and 9 are held in a suspended condition on the hanger pin 13, whereas the rotating-out disk side of the friction pads 8 and 9 are respectively supported by the torque receiving stepped portion 2d of the caliper bracket 2a and the sleeve nut 15.

The friction pads 8 and 9 are formed by securing linings 8a and 9a in slidable contact with the side of the disk rotor 4 to one sides of back panels 8b and 9b. Arm portions 8d and 9d with hanger-pin passing holes 8c and 9c bored are projected on the rotating-in disk sides of the back panels 8b and 9b. Torque transmitting arms 8e and 9e are provided on the rotating-out disk sides of the back panels 8b and 9b of the friction pads 8 and 9. A semi-arcuate forked piece 9f is provided at the front end of the torque transmitting arm 9e on the reaction part side.

The friction pad 8 on the action part side is held in the suspended condition by passing the hanger pin 13 through the hanger-pin passing hole 8c on the rotating-in disk side and the torque receiving stepped portion 2d of the caliper bracket 2a is supported by the torque transmitting arm 8e on the rotating-out disk side, so that the friction pad 8 is disposed movably in the direction of the disk axis between the piston 11 and one side of the disk rotor 4.

The friction pad 9 on the reaction part side is held in the suspended condition by passing the hanger pin 13 through the hanger-pin passing hole 9c on the rotating-in disk side likewise and half the periphery of the sleeve nut 15 is held in a covered condition with the forked piece 9f at the front end of the torque transmitting arm 9e on the rotating-out disk side, so that the friction pad 9 is disposed movably in the direction of the disk axis between the counterforce pawl 7d and the other side of the disk rotor 4.

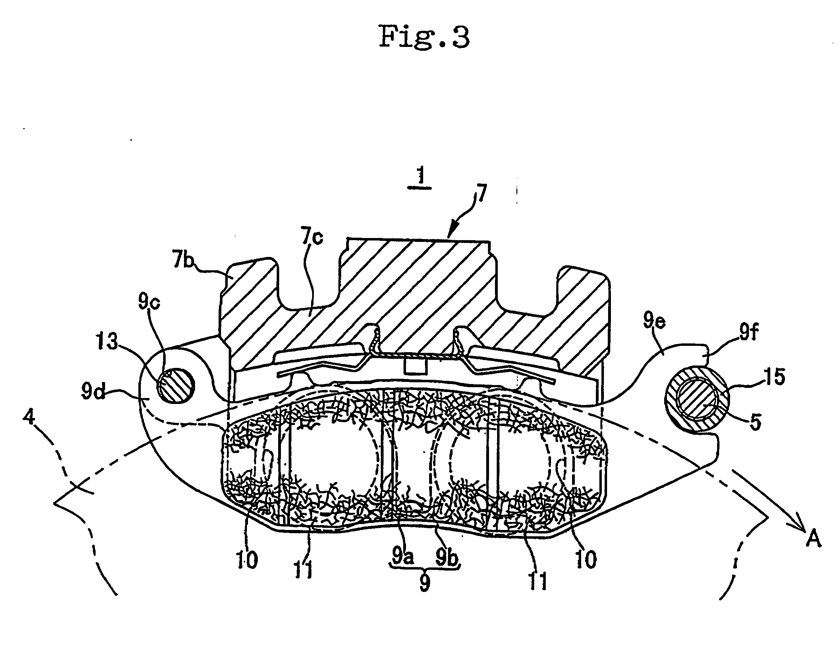

Note that as shown in Fig. 3, the forked piece 9f of the torque transmitting arm 9e is brought in engagement with about half of the outer periphery of the sleeve nut 15, to thereby prevent the friction pad 9 from rotating about the hanger pin 13.

The disk brake 1 is thus arranged according to one embodiment of the present invention and when pressurized working fluid is supplied to the hydraulic pressure chambers 12 and 12 of the caliper body 7 due to the braking operation performed by the driver, each piston 11 operates to move the cylinder hole 10 in the direction of the disk rotor 4, thus pushing the friction pad 8 on the action part side along so as to bring the lining 8a into slidable contact with one side of the disk rotor 4. The caliper body 7 is moved in the direction of the action part while being guided by the slide pins 5 and 6 and this causes the counterforce pawl 7d to push the friction pad 9 along on the reaction part side. Then the braking action is effected as the line 9a is brought into slidable contact with the other side of the disk rotor 4.

When the linings 7a and 8a are brought into slidable contact with the disk rotor 4, braking torque is produced from the friction pads 7 and 8 and the braking torque derived from the friction pad 8 on the action part side is transmitted from the torque transmitting arm 8e of the back panel 8b to the caliper bracket 2a via the torque receiving stepped portion 2d. The braking torque derived from the friction pad 9 on the reaction part side enters the sleeve nut 15 once from the forked piece 9f at the front end of the torque transmitting arm 9e and is transmitted to the caliper bracket 2a.

As the caliper bracket 2a positioned on the rotating-out disk side of the caliper body 7 is formed integrally with the bottom case 2 and also positioned on the same plane as that of the back panel 8b of the friction pad 8 (that is, the caliper bracket 2a is flush with the back panel 8b of the friction pat 8), great bearing rigidity is secured to the caliper bracket 2a, so that the caliper bracket 2a movably supports the direct braking torque from the friction pad 8 on the action part side to a good extent.

Moreover, since the sleeve nut 15 as a member for receiving the torque derived from the friction pad 9 on the reaction part side is projected in parallel to the disk axis from the caliper bracket 2a having thus increased rigidity force, the sleeve nut 15 movably supports the braking torque derived from the friction pad on the reaction part side without bending to a considerable extent. In particular, as the forked piece 9f of the torque transmitting arm 9e holds the sleeve nut 15 in a covered condition in the radial direction of the disk internally and externally, the friction pad 9 is restrained from lifting up during the braking operation, which results in suppressing the loss of the braking torque as much as possible.

Consequently, the rise-up of the initial braking force is improved and the set braking force can stably be demonstrated. Further, the provision of the platelike caliper brackets 2a and 2b simple in structure makes extremely easy the molding of such caliper brackets integrally with the bottom case 2 and this results in improving manufacturability and reducing the manufacturing cost.

Although a description has been given of the front wheel brake of a two-wheeled motorcycle in the above embodiment of the invention, the invention is also widely applicable to disk brakes for front or rear wheels of vehicle with bar handles.

As set forth above, in the disk brake for a vehicle with a bar handle according to the present invention, the caliper brackets integral with the wheel suspension unit and the torque receiving member projecting from the caliper bracket in parallel to the disk axis are capable of sufficiently bearing the braking torque derived from the friction pads, whereby the rise-up of the initial braking force is improved with the set braking force stably demonstrated. Further, the provision of the platelike caliper brackets simple in structure makes extremely easy the molding of such caliper brackets integrally with the wheel suspension unit and this results in improving manufacturability and reducing the manufacturing cost. Moreover, as the torque transmitting arm holds the torque receiving member in a covered condition, the friction pad is restrained from lifting up during the braking operation, which results in suppressing the loss of the braking torque as much as possible.

## Claims

1. A disk brake for a vehicle with a bar handle comprising:
a disk rotor (4) that integrally rotates with a wheel of the vehicle;
a pair of plate shaped caliper bracket members (2a, 2b) secured to a wheel suspension unit (2) of the vehicle;
a pair of slide pin members (5, 6) extending in parallel with the axial direction of the disk rotor (4);
a caliper body (7) movably supported on the wheel suspension unit (2) in the axial direction of the disk rotor (4) through the caliper bracket members (2a, 2b) and the slide pin members (5, 6), said caliper body (7) having an action part (7a) and a reaction part (7b) between which said disk rotor (4) is interposed in the axial direction of the disk rotor;
a first friction pad (8) disposed on the action part side of said disk rotor (4) and a second friction pad (9) disposed on the reaction part side of said disk rotor (4);
a hanger pin (13) provided between the action part and the reaction part for supporting rotating-in disk sides of the first and second friction pads in a suspended condition;
a torque receiving member (15) projected from said caliper bracket member (2a) in parallel with the axial direction of the disk rotor (4);
wherein the action part side (7a) of said caliper body (7) is supported with the calliper bracket members (2a, 2b) through said slide pin members (5, 6),
rotating-out disk sides of the first and second friction pads (8, 9) are supported with the caliper bracket member (2a), and
a torque transmitting arm (9e) is formed on the rotating-out disk side of the second friction pad (9) and is provided at its end portion with a fork shaped part that is engaged with said torque receiving member (15)
and wherein said slide pin members (5, 6) are directly mounted on said caliper bracket members (2a, 2b), whereby said caliper body (7) is movably supported by said caliper bracket members (2a, 2b) through said slide pin members (5, 6),
**characterised in that**:
said pair of caliper bracket members (2a, 2b) and the slide pin members (5, 6) are formed integrally with a bottom case (2) of a fork forming said wheel suspension unit of the vehicle, wherein the wheel of the vehicle is coupled to the fork by an axle (3) such that the bottom case (2) extends from a coupling location with the axle (3) along a single longitudinal direction with one of said pair of caliper bracket members (2a) provided on the rotating-out disk side of said caliper body (7) and on an outer periphery side of said disk (4), while the other of said caliper bracket members (2b) is provided on an inner peripheral side of said disk (4), thereby spacing the caliper bracket members (2a, 2b) along the bottom case (2) in the single longitudinal direction,
and **in that** said slide pin members (5, 6) are projectively provided on said action part side (7a) of said caliper body (7) so as to be parallel with the axial direction of said disk rotor (4) and so as to movably support said caliper body (7) in the axial direction of the disk,
the slide pin member (6) corresponding to the caliper bracket member (2b) provided on the inner peripheral side of said disk is inserted within an insertion hole (7j) of an attaching arm (7h) which is projected from said caliper body (7) to said inner peripheral side of the disk,
the slide pin member (5) corresponding to the caliper bracket member (2a) provided on the outer peripheral side of said disk comprising a shaft portion (5a) inserted within an insertion hole (7i) of an attaching arm (7g), a male screw (5b) for fitting said shaft portion (5a) to the rotating-out disk side-of said caliper bracket member (2a) through a sleeve nut (15), and a radially projecting outer flange (5c) disposed between the shaft portion (5a) and the male screw (5b) for clamping said rotating-out disk side of said caliper bracket member (2a).

2. The disk brake according to claim 1, wherein said fork shaped part of the torque transmitting arm (9e) engages about half the periphery of said torque receiving member (15).

3. The disk brake according to claim 1, wherein said caliper bracket member (2a) is arranged in flush with the first friction pad (8).

4. The disk brake according to claim 1, wherein said first caliper bracket (2a) is arranged in flush with the first friction pad (8).

5. The disk brake according to claim 1, wherein said first caliper bracket (2a) and said second caliper bracket (2b) are arranged in flush with the first friction pad (8).

6. The disk brake according to claim 1, wherein the fork shaped part of said torque transmitting arm (9e) is engaged with at least part of the outer periphery surface of the torque receiving member (15), to thereby prevent the second friction pad (9) from rotating about the hanger pin (13).

7. The disk brake according to claim 6, wherein the fork shaped part of said torque transmitting arm (9e) is engaged with about half of the outer periphery surface of the torque receiving member (15).

## Patentansprüche

1. Scheibenbremse für ein Fahrzeug mit einer Griffstange, die umfasst:
einen Scheibenrotor (4), der sich integral mit einem Rad des Fahrzeugs dreht;
ein Paar plattenförmiger Bremssattel-Halteelemente (2a, 2b), die an einer Radaufhängungseinheit (2) des Fahrzeugs befestigt sind;
ein Paar Gleitbolzenelemente (5, 6), die sich parallel zu der axialen Richtung des Scheibenrotors (4) erstrecken;
einen Bremssattelkörper (7), der von der Radaufhängungseinheit (2) in der axialen Richtung des Scheibenrotors (4) über die Bremssattel-Halteelemente (2a, 2b) und die Gleitbolzenelemente (5, 6) in der axialen Richtung beweglich getragen wird, wobei der Bremssattelkörper (7) einen Wirkungsteil (7a) und einen Gegenwirkungsteil (7b) hat, zwischen denen der Scheibenrotor (4) in der axialen Richtung des Scheibenrotors angeordnet ist;
einen ersten Reibbelag (8), der an der Seite des Wirkungsteils des Scheibenrotors (4) angeordnet ist, sowie einen zweiten Reibbelag (9), der an der Seite des Gegenwirkungsteils des Scheibenrotors (4) angeordnet ist;
einen Aufhängerbolzen (13), der zwischen dem Wirkungsteil und dem Gegenwirkungsteil vorhanden ist, um nach innen rotierende Scheibenseiten des ersten und des zweiten Reibbelages in einem aufgehängten Zustand zu tragen;
ein Drehmoment-Aufnahmeelement (15), das von dem Bremssattel-Halteelement (2a) parallel zu der axialen Richtung des Scheibenrotors (4) vorsteht;
wobei die Seite des Wirkungsteils (7a) des Bremssattelkörpers (7) mit den Bremssattel-Halteelemente (2a, 2b) über die Gleitbolzenelemente (5, 6) getragen wird,
nach außen rotierende Scheibenseiten des ersten und des zweiten Reibbelages (8, 9) mit dem Bremssattel-Halteelement (2a) getragen werden, und
ein Drehmoment-Übertragungsarm (9e) an der nach außen rotierenden Scheibenseite des zweiten Reibbelages (9) ausgebildet ist und an seinem Endabschnitt mit einem gabelförmigen Teil versehen ist, der mit dem Drehmoment-Aufnahmeelement (15) in Eingriff ist,
und wobei die Gleitbolzenelemente (5, 6) direkt an den Bremssattel-Halteelementen (2a, 2b) angebracht sind, so dass der Bremssattelkörper (7) über die Gleitbolzenelemente (5, 6) beweglich von den Bremssattel-Halteelementen (2a, 2b) getragen wird,
**dadurch gekennzeichnet, dass**
das Paar Bremssattel-Halteelemente (2a, 2b) und die Gleitbolzenelemente (5, 6) integral mit einer unteren Hülse (2) einer Gabel ausgebildet sind, die die Radaufhängungseinheit des Fahrzeugs bildet, wobei das Rad des Fahrzeugs durch eine Achse (3) mit der Gabel so verbunden ist, dass sich die untere Hülse (2) von einer Verbindungsposition mit der Achse (3) aus in einer Längsrichtung erstreckt, und eines des Paars von Bremssattel-Halteelementen (2a) an der nach außen rotierenden Scheibenseite des Bremssattelkörpers (7) und an der Außenumfangsseite der Scheibe (4) vorhanden ist, während das andere der Bremssattel-Halteelemente (2b) an einer Innenumfangsseite der Scheibe (4) vorhanden ist und so die Bremssattel-Halteelemente (2a, 2b) entlang der unteren Hülse (2) in der einen Längsrichtung beabstandet hält,
und dass die Gleitbolzenelemente (5, 6) vorstehend an der Seite des Wirkungsteils (7a) des Bremssattelkörpers (7) so vorhanden sind, dass sie parallel zu der axialen Richtung des Scheibenrotors (4) sind, und so, dass sie den Bremssattelkörper (7) in der axialen Richtung der Scheibe beweglich tragen,
das Gleitbolzenelement (6), das dem Bremssattel-Halteelement (2b) entspricht, das an der Innenumfangsseite der Scheibe vorhanden ist, in ein Einführloch (7j) eines Anbringungsarms (7h) eingeführt ist, der von dem Bremssattelkörper (7) zu der Innenumfangsseite der Scheibe vorsteht,
das Gleitbolzenelement (5), das dem Bremssattel-Halteelement (2a) entspricht, das an der Außenumfangsseite der Scheibe vorhanden ist, einen Wellenabschnitt (5a), der in ein Einführloch (7i) eines Anbringungsarms (7g) eingeführt ist, eine Außengewindeschraube (5b) zum Aufpassen des Wellenabschnitts (5a) auf die nach außen rotierende Scheibenseite des Bremssattel-Halteelementes (2a) über eine Überwurfmutter (15), sowie einen radial vorstehenden äußeren Flansch (5c) umfasst, der zwischen dem Wellenabschnitt (5a) und der Außengewindeschraube (5b) angeordnet ist, um die nach außen rotierende Scheibenseite des Bremssattel-Halteelementes (2a) festzuklemmen.

2. Scheibenbremse nach Anspruch 1, wobei der gabelförmige Teil des Drehmoment-Übertragungsarms (9e) mit ungefähr der Hälfte des Umfangs des Drehmoment-Aufnahmeelementes (15) in Eingriff ist.

3. Scheibenbremse nach Anspruch 1, wobei das Bremssattel-Halteelement (2a) bündig mit dem ersten Reibbelag (8) angeordnet ist.

4. Scheibenbremse nach Anspruch 1, wobei der erste Bremssattelhalter (2a) bündig mit dem ersten Reibbelag (8) angeordnet ist.

5. Scheibenbremse nach Anspruch 1, wobei der erste Bremssattelhalter (2a) und der zweite Bremssattelhalter (2b) bündig mit dem ersten Reibbelag (8) angeordnet sind.

6. Scheibenbremse nach Anspruch 1, wobei der gabelförmige Teil des Drehmoment-Übertragungsarms (9e) mit wenigstens einem Teil der Außenumfangsfläche des Drehmoment-Aufnahmeelementes (15) in Eingriff ist, um so zu verhindern, dass sich der zweite Reibbelag (9) um den Aufhängerbolzen (13) herum dreht.

7. Scheibenbremse nach Anspruch 6, wobei der gabelförmige Teil des Drehmoment-Übertragungsarms (9e) mit ungefähr der Hälfte der Außenumfangsfläche des Drehmoment-Aufnahmeelementes (15) in Eingriff ist

## Revendications

1. Frein à disque pour un véhicule à guidon comprenant :
un rotor de disque (4) qui tourne conjointement avec une roue du véhicule ;
une paire d'éléments formant supports d'étrier en forme de plaque (2a, 2b) fixés à une unité de suspension de roue (2) du véhicule ;
une paire d'éléments formant axes coulissants (5, 6) s'étendant parallèlement à la direction axiale du rotor de disque (4) ;
un corps d'étrier (7) supporté de façon mobile sur l'unité de suspension de roue (2) dans la direction axiale du rotor de disque (4) par le biais des éléments formant supports d'étrier (2a, 2b) et des éléments formant axes coulissants (5, 6), ledit corps d'étrier (7) ayant une partie d'action (7a) et une partie de réaction (7b) entre lesquelles est intercalé le rotor de disque (4) dans la direction axiale du rotor de disque;
une première plaquette de frein (8) disposée sur le côté de partie d'action dudit rotor de disque (4) et une seconde plaquette de frein (9) disposée sur le côté de partie de réaction dudit rotor de disque (4) ;
un axe de suspension (13) prévu entre la partie d'action et la partie de réaction pour supporter les côtés de disque tournant vers l'intérieur des première et seconde plaquettes de frein dans un état suspendu ;
un élément de réception de couple (15) en saillie à partir dudit élément formant support d'étrier (2a) parallèlement à la direction axiale du rotor de disque (4) ;
dans lequel le côté de partie d'action (7a) dudit corps d'étrier (7) est supporté avec les éléments formant supports d'étrier (2a, 2b) par le biais desdits éléments formant axes coulissants (5, 6),
les côtés de disque tournant vers l'extérieur des première et seconde plaquettes de frein (8, 9) sont supportés avec l'élément formant support d'étrier (2a), et
un bras de transmission de couple (9e) est formé sur le côté de disque tournant vers l'extérieur de la seconde plaquette de frein (9) et est doté au niveau de sa partie d'extrémité d'un élément en forme de fourche qui est mis en prise avec ledit élément de réception de couple (15),
et dans lequel lesdits éléments formant axes coulissants (5, 6) sont montés directement sur lesdits éléments formant supports d'étrier (2a, 2b), ledit corps d'étrier (7) étant supporté de façon mobile par lesdits éléments formant supports d'étrier (2a, 2b) par le biais desdits éléments formant axes coulissants (5,6),
**caractérisé en ce que** :
ladite paire d'éléments formant supports d'étrier (2a, 2b) et les éléments formant axes coulissants (5, 6) sont formés d'un seul tenant avec un fourreau inférieur (2) d'une fourche formant ladite unité de suspension de roue du véhicule, dans lequel la roue du véhicule est couplée à la fourche par un essieu (3), de telle sorte que le fourreau inférieur (2) s'étend depuis un emplacement de liaison avec l'essieu (3) le long d'une seule direction longitudinale avec un de ladite paire d'éléments formant supports d'étrier (2a) prévu sur le côté de disque tournant vers l'extérieur dudit corps d'étrier (7) et sur un côté de périphérie externe dudit disque (4), alors que l'autre desdits éléments formant supports d'étrier (2b) est prévu sur un côté périphérique interne dudit disque (4), espaçant ainsi les éléments formant supports d'étrier (2a, 2b) le long du fourreau inférieur (2) dans la seule direction longitudinale,
et **en ce que** lesdits éléments formant axes coulissants (5, 6) sont prévus en en saillie sur ledit côté de partie d'action (7a) dudit corps d'étrier (7), de sorte à être parallèles à la direction axiale dudit rotor de disque (4) et de sorte à supporter de façon mobile ledit corps d'étrier (7) dans la direction axiale du disque,
l'élément formant axe coulissant (6) correspondant à l'élément formant support d'étrier (2b) prévu sur le côté périphérique interne dudit disque est inséré à l'intérieur d'un trou d'insertion (7j) d'un bras de fixation (7h) qui fait saillie à partir dudit corps d'étrier (7) vers le côté périphérique interne du disque,
l'élément formant axe coulissant (5) correspondant à l'élément formant support d'étrier (2a) prévu sur le côté périphérique externe dudit disque comprenant une partie d'arbre (5a) insérée à l'intérieur d'un trou d'insertion (7i) d'un bras de fixation (7g), une vis mâle (5b) pour fixer ladite partie d'arbre (5a) sur le côté de disque tournant vers l'extérieur dudit élément de support d'étrier (2a) par le biais d'un écrou formant manchon (15), et un rebord externe faisant saillie radialement (5c) disposé entre la partie d'arbre (5a) et la vis mâle (5b) pour serrer ledit côté de disque tournant vers l'extérieur dudit élément formant support d'étrier (2a).

2. Frein à disque selon la revendication 1, dans lequel ladite partie en forme de fourche du bras de transmission de couple (9e) se met en prise avec environ la moitié de la périphérie dudit élément de réception de couple (15).

3. Frein à disque selon la revendication 1, dans lequel ledit élément formant support d'étrier (2a) est agencé en affleurement avec la première plaquette de frein (8).

4. Frein à disque selon la revendication 1, dans lequel ledit premier support d'étrier (2a) est agencé en affleurement avec la première plaquette de frein (8).

5. Frein à disque selon la revendication 1, dans lequel ledit premier support d'étrier (2a) et ledit second support d'étrier (2b) sont agencés en affleurement avec la première plaquette de frein (8).

6. Frein à disque selon la revendication 1, dans lequel la partie en forme de fourche dudit bras de transmission de couple (9e) est mise en prise avec au moins une partie de la surface périphérique externe de l'élément de réception de couple (15), pour empêcher ainsi la rotation de la seconde plaquette de frein (9) sur l'axe de suspension (13).

7. Frein à disque selon la revendication 6, dans lequel la partie en forme de fourche dudit bras de transmission de couple (9e) est mise en prise avec environ la moitié de la surface périphérique externe de l'élément de réception de couple (15).
